(19) Europäisches Patentamt
European Patent Office
Office européen des brevets

(11) EP 1 047 724 B1

(12) # EUROPÄISCHE PATENTSCHRIFT

(45) Veröffentlichungstag und Bekanntmachung des Hinweises auf die Patenterteilung:
**26.06.2002 Patentblatt 2002/26**

(21) Anmeldenummer: **99901587.8**

(22) Anmeldetag: **05.01.1999**

(51) Int Cl.7: **C08K 5/521**, C08L 69/00

(86) Internationale Anmeldenummer:
**PCT/EP99/00025**

(87) Internationale Veröffentlichungsnummer:
**WO 99/36468 (22.07.1999 Gazette 1999/29)**

(54) **POLYCARBONAT-ABS-FORMMASSEN**

POLYCARBONATE ABS MOULDING COMPOUNDS

MATIERES MOULEES CONSTITUEES DE POLYCARBONATE ET D'ABS

(84) Benannte Vertragsstaaten:
**BE CH DE DK ES FR GB IT LI NL**

(30) Priorität: **14.01.1998 DE 19801050**

(43) Veröffentlichungstag der Anmeldung:
**02.11.2000 Patentblatt 2000/44**

(73) Patentinhaber: **Bayer Aktiengesellschaft
51368 Leverkusen (DE)**

(72) Erfinder:
- **ECKEL, Thomas
D-41540 Dormagen (DE)**
- **ZOBEL, Michael
D-40547 Düsseldorf (DE)**
- **WITTMANN, Dieter
D-51375 Leverkusen (DE)**

(56) Entgegenhaltungen:
**EP-A- 0 446 358**
**EP-A- 0 522 432**
**DE-A- 2 414 849**
**US-A- 4 244 848**
**US-E- R E32 473**

- **DATABASE WPI Section Ch, Derwent Publications Ltd., London, GB; Class A24, AN 70-41851R XP002102364 -& JP 45 016826 B (UNITIKA LTD)**
- **PATENT ABSTRACTS OF JAPAN vol. 003, no. 114 (C-059), 21. September 1979 -& JP 54 091553 A (ADEKA ARGUS CHEM CO LTD), 20. Juli 1979**
- **PATENT ABSTRACTS OF JAPAN vol. 007, no. 100 (C-164), 28. April 1983 & JP 58 027734 A (ADEKA ARGUS KAGAKU KK), 18. Februar 1983**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 047 724 B1

## Beschreibung

Die vorliegende Erfindung betrifft Phosphorverbindungen enthaltende Polycarbonat-ABS-Formmassen, die ein ausgezeichnetes mechanisches Eigenschaftsniveau, insbesondere eine ausgezeichnete Kerbschlagzähigkeit, Spannungsrißverhalten und Wärmeformbeständigkeit aufweisen.

Metallsalze von organischen Monophosphorsäureestern oder Diphosphorsäuren sind bekannt. Sie werden bisher verwendet als Thermo- und UV-Stabilisatoren in halogenhaltigen Formmassen wie PVC (JP 010 792 44, JP 540 915 53, JP 580 277 34) oder in Polyamiden (JP 450 168 26B4).

Polycarbonat-ABS-Blends sind eine bekannte Stoffklasse für Anwendungen im Automobilsektor und im Elektro/Elektronik-Bereich. Dabei hat sich die günstige Eigenschaftskombination aus hoher Wärmeformbeständigkeit und guten mechanischen Werten beispielsweise in der Kerbschlagzähigkeit oder im Spannungsrißverhalten stets als Vorteil erwiesen. Sollte dennoch für bestimmte Teile die Kerbschlagzähigkeit oder die Spannungsrißbeständigkeit nicht ausreichend sein, so ist die übliche Vorgehensweise eine Erhöhung des Kautschukgehaltes. Diese Maßnahme ist jedoch stets mit einer deutlichen Reduktion der Wärmeformbeständigkeit verbunden.

Es wurde nun gefunden, daß dieses Problem unter Verwendung der erfindungsgemäßen Phosphorverbindungen gelöst werden kann.

Gegenstand der vorliegenden Erfindung sind thermoplastische Formmassen enthaltend

A. 5 bis 95, vorzugsweise 10 bis 90, besonders bevorzugt 20 bis 85 Gew.-Teile, insbesondere 50 bis 85 Gew.-Teile Polycarbonat und/oder Polyestercarbonat,

B. 0 bis 50, vorzugsweise 1 bis 30, besonders bevorzugt 2 bis 25 Gew.-Teile, eines Vinyl(co)polymerisates aus einem oder wenigstens zwei ethylenisch ungesättigten Monomeren,

C. 0,5 bis 60, vorzugsweise 1 bis 40, besonders bevorzugt 2 bis 30 Gew.-Teile Pfropfpolymerisat mit einer Glasübergangstemperatur <10°C erhältlich durch Pfropfpolymerisation von mindestens 2 der Monomeren ausgewählt aus Chloropren, Butadien, Isopren, Styrol, Acrylnitril, Ethylen, Propylen, Vinylacetat und (Meth)-Acrylsäureester mit 1 bis 18 C-Atomen in der Alkoholkomponente,
und

D. 0,5 bis 20 Gew.-Teilen, bevorzugt 1 bis 18 Gew.-Teilen, besonders bevorzugt 2 bis 15 Gew.-Teilen Phosphorverbindung der Formel (Ia) und/oder (Ib)

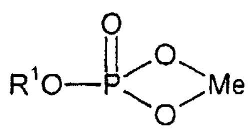

(Ia)

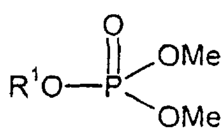

(Ib)

oder der Formel (II)

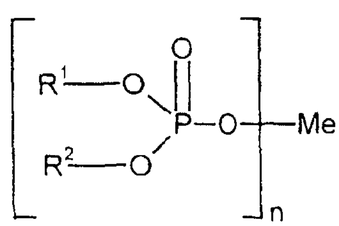

(II)

worin

$R^1$ und $R^2$ unabhängig voneinander, gegebenenfalls halogeniertes $C_1$-$C_{24}$-Alkyl, jeweils gegebenenfalls durch Halogen und/oder $C_1$-$C_{10}$-Alkyl substituiertes $C_5$-$C_6$-Cycloalkyl, $C_6$-$C_{20}$-Aryl oder $C_7$-$C_{12}$-Aralkyl bedeuten,

oder

$R^1$ und $R^2$ im Falle der Formel (II) auch einen Alkylen-Rest, vorzugsweise mit bis zu 6, insbesondere 2 oder 3 Kohlenstoffatomen oder einen Arylen-Rest, vorzugsweise Phenylen, bilden können,

Me für ein Metall, ausgewählt aus der 1, bis 3. Hauptgruppe oder der Nebengruppe VIII, 1B und 2B des Periodensystems steht,

und n durch die Wertigkeit des Metallions bestimmt wird.

## Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarobonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (II)

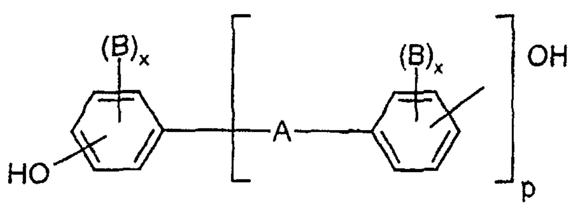

(II)

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, -$SO_2$-, $C_6$-$C_{12}$-Arylen, an das weitere aromatische gegebenenfalls Heteroatome enthaltende Ringe kondensiert sein können,
oder ein Rest der Formel (III) oder (IV)

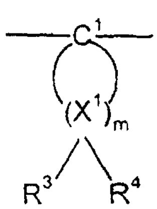

(III)

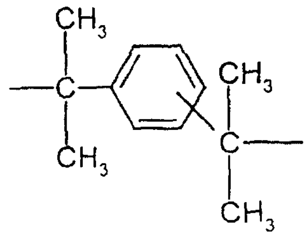

(IV)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^3$ und $R^4$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, daß an mindestens einen Atom $X^1$, $R^3$ und $R^4$ gleichzeitig Alkyl sind.

Bevorzugte Diphenole sind Hydrochinon, Resocin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxylphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid. 4,4'-Dihydroxydiphenyl-sulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribrornphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielseise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (s. dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2.2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen aromatischen Polycarbonate und Polyestercarbonate können allein oder in beliebigen Gemischen eingesetzt werden.

**Komponente B**

Das thermoplastische Polymer B, das gegebenenfalls in den erfindungsgemäßen Formmassen vorhanden ist, umfaßt (Co)Polymere von einem oder wenigstens zwei ethylenisch ungesättigten Monomeren (Vinylmonomeren) wie beispielsweise Styrol, $\alpha$-Methylstyrol, kernsubstituierte Styrole, (z.B. halogen- und/oder alkylkernsubstituiert) Acrylnitril, Methacrylnitril, Methylmethacrylat, Maleinsäureanhydrid, N-substituierte Maleinimide und (Meth)-Acrylsäureester mit 1 bis 18 C-Atomen in der Alkoholkomponente.

Die (Co)Polymerisate gemäß Komponente B sind harzartig, thermoplastisch und kautschukfrei. Die Formmasse kann auch verschiedene (Co)Polymerisate B enthalten. Besonders bevorzugt werden 2 bis 25 Gew.-Teile zugesetzt.

Bevorzugte Vinyl-(Co)polymerisate B sind solche aus wenigstens einem Monomeren aus der Reihe Styrol, $\alpha$-Methylstyrol und/oder kernsubstituiertem Styrol und/oder Methylmethacrylat (B.1) mit wenigstens einem Monomeren aus der Reihe Acrylnitril, Methacrylnitril, Methylmethacrylat, Maleinsäureanhydrid und/oder N-alkyl-und N-arylsubstituiertem Maleinimid (B.2)

Der Gehalt an Monomeren B.1 im (Co)Polymer beträgt vorzugsweise 50 bis 99, besonders bevorzugt 60 bis 95 Gew.-% der Monomeren B.2, vorzugsweise 1 bis 50, besonders bevorzugt 40 bis 5 Gew.-%.

Besonders bevorzugte Copolymerisate B sind solche aus Styrol mit Acrylnitril und gegebenenfalls mit Methylmethacrylat, aus $\alpha$-Methylstyrol mit Acrylnitril und gegebenenfalls mit Methylmethacrylat, oder aus Styrol und $\alpha$-Methylstyrol mit Acrylnitril und gegebenenfalls mit Methylmethacrylat.

Die (Co)Polymerisate gemäß Komponente B sind bekannt und lassen sich durch radikalische Polymerisation,

insbesondere durch Emulsions-, Suspensions-, Lösungs-oder Massepolymerisation herstellen. Die Copolymerisate gemäß Komponente B besitzen vorzugsweise Molekulargewichte $\overline{M}_w$ (Gewichtsmittel, ermittelt durch Lichtstreuung oder Sedimentation) zwischen 15.000 und 200.000.

Besonders bevorzugte erfindungsgemäße Copolymerisate B sind auch statistisch aufgebaute Copolymerisate aus Styrol und Maleinsäureanhydrid, die bevorzugt durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, 2,4-Dimethylstyrol und andere substituierte Styrole, wie α-Methylstyrol, enthalten.

Die Molekulargewichte (Zahlenmittel $\overline{M}_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60.000 bis 200.000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

## Komponente C

Die erfindungsgemäße Komponente C stellt Pfropfpolymerisate dar, welche auch als Gemisch in der Formmasse enthalten sein können. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind. Bevorzugte Polymerisate C sind partiell vernetzt und besitzen Gelgehalte von über 20 Gew.-%, vorzugsweise über 40 Gew.-%, insbesondere über 60 Gew.-%.

Bevorzugte Pfropfpolymerisate C umfassen Pfropfpolymerisate aus:

C.1 5 bis 95, vorzugsweise 30 bis 80 Gew.-Teilen einer Mischung aus

C.1.1 50 bis 99 Gew.-Teilen Styrol, α-Methylstyrol, halogen- oder methylkernsubstituierten Styrolen, Methylmethacrylat oder Mischungen dieser Verbindungen und

C.1.2 1 bis 50 Gew.-Teilen Acrylnitril, Methacrylnitril, Methylmethacrylat, Maleinsäureanhydrid, $C_1$-$C_4$-Alkyl bzw. Phenyl-N-substituierten Maleinimiden oder Mischungen dieser Verbindungen auf

C.2 5 bis 95, vorzugsweise 20 bis 70 Gew.-Teilen Polymerisat auf Dien-und/oder Alkylacrylat-Basis mit einer Glasübergangstemperatur unter -10°C.

Bevorzugte Pfropfpolymerisate C sind z.B. mit Styrol und/oder Acrylnitril und/oder (Meth)Acrylsäurealkylestern gepfropfte Grundlagen C.2 wie Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate C sind z.B. ABS-Polyymerisate, wie sie z.B. in der DE-OS 2 035 390 (= US-PS 3 644 574) oder in der DE-OS 2 248 242 (= GB-PS 1 409 275) beschrieben sind.

Besonders bevorzugte Pfropfpolymerisate C sind erhältlich durch Pfropfreaktion von

α 10 bis 70, vorzugsweise 15 bis 50, insbesondere 20 bis 40 Gew.-%, bezogen auf Pfropfpolymerisat C, mindestens eines (Meth)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)Acrylsäureester und 50 bis 90, vorzugsweise 65 bis 80 Gew.-%, bezogen auf Gemisch, Styrol, als Pfropfauflage C.1 auf

β 30 bis 90, vorzugsweise 50 bis 85, insbesondere 60 bis 80 Gew.-%. bezogen auf Pfropfpolymerisat C, eines Butadienpolymerisats mit mindestens 50 Gew.-%, bezogen auf β, Butadienresten als Pfropfgrundlage C.2,

wobei vorzugsweise der Gelanteil der Pfropfgrundlage β mindestens 20 Gew.-% (in Toluol gemessen) beträgt.

Der Pfropfgfad G beträgt vorzugsweise 0,15 bis 0,55 und der mittlere Teilchendurchmesser $d_{50}$ des Pfropfpolymerisats C.2 vorzugsweise 0,05 bis 2 μm, insbesondere 0,1 bis 0,6 μm.

(Meth)Acrylsäureester α sind Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate C sind z.B. auch Pfropfpolymerisate aus

τ. 20 bis 90 Gew.-%, bezogen auf Komponente C, Acrylatkautschuk mit einer Glasübergangstemperatur < -20°C als Pfropfgrundlage C.2 und

δ. 10 bis 80 Gew.-%. bezogen auf Komponente C, mindestens eines polymerisierbaren, ethylenisch ungesättigten Monomeren als Pfropfmonomere C.1.

Die Acrylatkautschuke τ der Polymerisate C sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl-und Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugt "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-$C_1$-$C_6$alkylether, Methylmethacrylat, Butadien. Bevorzugte Acrylatkautschuke als Pfropfgrundlage τ sind Emulsionspolymerisate, die einen Gehalt von mindestens 60 Gew.-% aufweisen.

Weitere geeignete Pfropfgrundlagen gemäß C.2 sind Silikonkautschuke mit pfropfaktiven Stellen, wie sie in DE-OS 3 704 657, DE-OS 3 704 655, DE-OS 3 631 540 und DE-OS 3 631 539 beschrieben werden.

Der Gelgehalt der Pfropfgrund C.2 wird bei 25°C in Dimethylformamid bestimmt (M. Hoffmann, H. Krömer, R. Kuhn. Polymeranalytik I und II, Georg Thieme-Verlag, Stuttgart 1977).

Die Pfropfpolymerisate C können nach bekannten Verfahren wie Masse-, Suspensions-, Emulsions- oder Masse-Suspensionsverfahren hergestellt werden. Als Katalysatoren können beispielsweise Ascorbinsäure und Hydroperoxide, wie Cumolhydroperoxid, verwendet werden.

**<u>Komponente D</u>**

Die erfindungsgemäßen Formmassen enthalten als Phosphorverbindungen Metallverbindungen von Monoestern der Phosphorsäure der Formel (Ia) und (Ib),

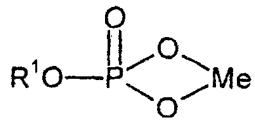

(Ia)

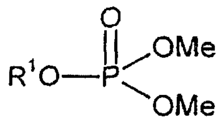

(Ib)

oder Metallverbindungen von Diestern der Phosphorsäure gemäß Formel (II)

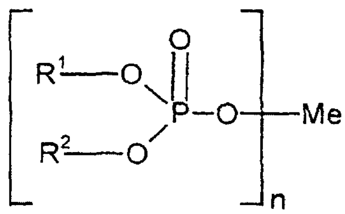

(II)

worin $R^1$ und $R^2$, Me und n die zuvor beschriebene Bedeutung haben.

$R^1$ und $R^2$ stehen unabhängig voneinander vorzugsweise für gegebenenfalls halogeniertes (vorzugsweise durch Chlor und/oder Brom) $C_1$-$C_{15}$-, insbesondere $C_1$-$C_{10}$-Alkyl, jeweils gegebenenfalls durch Halogen (vorzugsweise Chlor und/oder Brom) und/oder $C_1$-$C_6$-, insbesondere $C_1$-$C_4$-Alkyl, insbesondere Methyl, Ethyl, n-, iso-Propyl, substituiertes Cyclopentyl, Cyclohexyl, Phenyl, Naphthyl, Phenyl-$C_1$-$C_4$-alkyl (wie Benzyl).

$R^1$ und $R^2$ stehen unabhängig voneinander besonders bevorzugt für Kresyl, Phenyl, Xylenyl, Propylphenyl oder Butylphenyl sowie die entsprechenden bromierten und chlorierten Derivate davon.

Im Falle von Formel (II) können $R^1$ und $R^2$ auch einen Alkylen-Rest, vorzugsweise mit bis zu 6, insbesondere 2 oder 3 Kohlenstoffatomen oder einen Arylen-rest, vorzugsweise Phenylen, bilden.

Geeignete Metalle stellen die 1. bis 3. Hauptgruppe sowie die Nebengruppe (VIII), IB und IIB des Periodensystems (nach Mendelejew) dar, bevorzugt sind Metalle aus der 2. und 3. Hauptgruppe und der II. Nebengruppe.

Besonders bevorzugt sind die Verbindungen der Metalle Mg, Ca, Ba, Bor, Al und Zn.

Zur Herstellung der erfindungsgemäßen Metallverbindungen der Phosphorsäureester sind literaturbekannte Verfahren wie beispielsweise das Umesterungsverfahren ausgehend von Triestern der Phosphorsäure oder das Säurehalogenid-Verfahren, ausgehend von Phosphorylchlorid geeignet (EP-A 0 801 116; J. Org. Chem. 1978, Vol. 43, Nr. 1, S. 24-31).

Vorzugsweise werden bei der Herstellung der erfindungsgemäßen Phosphorsäureester die anorganischen Reaktionskomponenten in feinstteiliger Form eingesetzt. Die durchschnittlichen Teilchendurchmesser sind $\leq 1\ \mu m$, vorzugsweise $\leq 200$ nm.

Die durchschnittlichen Teilchendurchmesser der erfindungsgemäßen Phosphorsäureester sind $<10\ \mu m$, vorzugsweise $<1\ \mu m$, besonders bevorzugt <300 nm.

Die thermoplastischen Formmassen können weiterhin anorganische Verstärkungsmaterialien wie Glasfasern, gegebenenfalls geschnitten oder gemahlen, Glasperlen, Glaskugeln, blättchenförmiges Verstärkungsmaterial, wie Kaolin, Talk, Glimmer, Mika, Kohlefasern oder deren Mischung enthalten. Vorzugsweise werden als Verstärkungsmaterial geschnittene oder gemahlene Glasfasern, vorzugsweise mit einer Länge von 1 bis 10 mm und einem Durchmesser von $<20\ \mu m$, in einer Menge von 1 bis 40 Gew.-Teilen eingesetzt; vorzugsweise sind die Glasfasern oberflächenbehandelt.

Die erfindungsgemäßen Formmassen können im allgemeinen 0.01 bis 20 Gew.-%, bezogen auf die Gesamt-Formmasse, Flammschutzmittel enthalten. Beispielhaft werden als Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-hydroxid, anorganische Verbindungen wie Aluminiumoxide, Titandioxide, Antimon-oxide, Barium-metaborat, Hydroxoantimonat, Zirkon-oxid, Zirkon-hydroxid, Molybden-oxid, Ammoniummolyybdat, Zinn-borat, Ammonium-borat, Barium-metaborat und Zinnoxid sowie Siloxanverbindungen.

Als Flammschutzverbindungen können ferner Phosphorverbindungen, wie sie in EP-A 363 608, EP-A 345

522 oder EP-A 640 655 beschrieben sind, eingesetzt werden.

Solche Phosphor-Verbindungen sind beispielsweise Phosphor-Verbindungen der Formel (V)

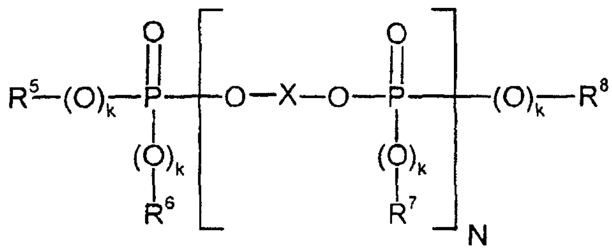

(V),

in welcher

$R^5$, $R^6$, $R^7$ und $R^8$, unabhängig voneinander jeweils gegebenenfalls halogeniertes $C_1$-$C_8$-Alkyl, jeweils gegebenenfalls durch Alkyl, vorzugsweise $C_1$-$C_4$-Alkyl, und/oder Halogen, vorzugsweise Chlor, Brom, substituiertes $C_5$-$C_6$-Cycloalkyl, $C_6$-$C_{20}$-Aryl oder $C_7$-$C_{12}$-Aralkyl bedeuten.

Bevorzugt stehen $R^5$, $R^6$, $R^7$ und $R^8$ unabhängig voneinander für $C_1$-$C_4$-Alkyl, Phenyl, Naphthyl oder Phenyl-$C_1$-$C_4$-alkyl. Die aromatischen Gruppen $R^5$, $R^6$, $R^7$ und $R^8$ können ihrerseits mit Halogen- und/oder Alkylgruppen, vorzugsweise Chlor, Brom und/oder $C_1$-$C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (V) bedeutet einen ein- oder mehrkernigen aromatischen Rest mit 6 bis 30 C-Atomen. Dieser leitet sich von Diphenolen gemäß Formel (II) ab wie z.B. Diphenylphenol, Bisphenol A, Resorcin oder Hydrochinon oder deren chlorierten oder bromierten Derivaten.

k in der Formel (V) kann, unabhängig voneinander, 0 oder 1 sein, vorzugsweise ist n gleich 1.

N steht für Werte von 0 bis 30, vorzugsweise für 0 bzw. einen durchschnittlichen Wert von 0,3 bis 20 , besonders bevorzugt 0,5 bis 10, insbesondere 0,5 bis 6, im Falle von Mischungen.

Mischungen aus Phosphorverbindungen der Formel (V) enthalten vorzugsweise 10 bis 90 Gew.-%, vorzugsweise 12 bis 40 Gew.-%, wenigstens einer Monophosphorverbindung der Formel (V) und wenigstens einer oligomeren Phosphorverbindung beziehungsweise eines Gemisches von oligomeren Phosphorverbindungen in Mengen von 10 bis 90 Gew.-%, vorzugsweise 60 bis 88 Gew.-%. bezogen auf die Gesamtmenge an Phosphorverbindungen, eingesetzt.

Monophosphorverbindungen der Formel (V) sind insbesondere Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Mischungen aus monomeren und oligomeren Phosphorverbindungen der Formel (V) weisen durchschnittliche N-Werte von 0,3 bis 20, bevorzugt 0,5 bis 10, insbesondere von 0,5 bis 6 auf.

Die Phosphorverbindungen gemäß Formel (V) sind bekannt (vgl. z.B. EP-A 363 608, EP-A 640 655, EP-A 542 522) oder lassen sich nach bekannten Methoden in analoger Weise herstellen (z.B. Ullmanns Encyklopädic der technischen Chemie, Bd. 18, S. 301 ff. 1979; Houben-Weyl, Methoden der organischen Chemie, Bd. 12/1, S. 43; Beilstein Bd. 6, S. 177).

Ferner können die erfindungsgemäßen thermoplastischen Formmassen feinstteilige anorganische Verbindungen enthalten, die sich günstig auf die Flammschutzeigenschaften der erfindungsgemäßen Formmassen auswirken. Diese anorganischen Verbindungen umfassen Verbindungen eines oder mehrerer Metalle der 1. bis 5. Hauptgruppe oder der 1. bis 8. Nebengruppe des Periodensystems, bevorzugt der 2. bis 5. Hauptgruppe oder der 4. bis 8. Nebengruppe, besonders bevorzugt der 3. bis 5. Hauptgruppe oder der 4. bis 8. Nebengruppe mit den Elementen Sauerstoff, Schwefel, Bor, Phosphor, Kohlenstoff, Stickstoff, Wasserstoff und/oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, $TiO_2$, $SnO_2$, WC, ZnO, $Al_2O_3$,

AlO(OH), $ZrO_2$, $Sb_2O_3$, $SiO_2$, Eisenoxide, $NaSO_4$, $BaSO_4$, Vanadianoxide, Zinkborat, Silicate wie Al-Silikate, Mg-Silikate, ein-, zwei-, drei-dimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser $d_{50}$, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern, Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Komponenten B oder C mit Dispersionen, Suspensionen, Pasten oder Solen der feinstteiligen anorganischen Materialien dar.

Die erfindungsgemäßen Formmassen können darüber hinaus übliche Additive, wie Gleit- und Entformungsmittel, Nukleiermittel, Antistatika, Stabilisatoren, Füll- und Verstärkungsstoffe sowie Farbstoffe und Pigmente enthalten.

Weiterhin können fluorierte Polyolefine zugesetzt werden. Die fluorierten Polyolefine sind hochmolekular und besitzen Glasübergangstemperaturen von über -30°C, in der Regel von über 100°C. Fluorgehalte, vorzugsweise von 65 bis 76, insbesondere von 70 bis 76 Gew.-%. mittlere Teilchendurchmesser $d_{50}$ von 0,05 bis 1.000, vorzugsweise 0,08 bis 20 µm. Im allgemeinen haben die fluorieiten Polyolefine E eine Dichte von 1.2 bis 2.3 g/cm³.

Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484 bis 494; "Fluorpolymers" von Wall, Wiley-Interscience, John Wiley & Sons, Inc., New York, Band 13, 1970, Seite 623 bis 654; "Modern Plastics Encyclopedia", 1970 bis 1971, Band 47, Nr. 10A, Oktober 1970, Mc Grow-Hill, Inc., New York, Seite 134 und 774; "Modern Plastics Encyclopedia", 1975 bis 1976, Oktober 1975, Band 52, Nr. 10A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat bei Drucken von 7 bis 71 kg/cm² und bei Temperaturen von 0 bis 200°C, vorzugsweise bei Temperaturen von 20 bis 100°C. (Nähere Einzelheiten siehe z.B. US-Patent 2 393 967). Je nach Einsatzform kann die Dichte dieser Materialien zwischen 1,2 und 2,3 g/cm³, die mittlere Teilchengröße zwischen 0,05 und 1.000 nm liegen.

Erfindungsgemäß bevorzugte fluorierte Polyolefine sind Tetrafluorethylenpolymerisate und haben mittlere Teilchendurchmesser von 0,05 bis 20 µm, vorzugsweise 0,08 bis 10 µm, und eine Dichte von 1,2 bis 1,9 g/cm³. Sie werden vorzugsweise in Form einer koagulierten Mischung von Emulsionen der Tetrafluorethylenpolymerisate mit Emulsionen der Pfropfpolymerisate C eingesetzt.

Geeignete, in Pulverform einsetzbare fluorierte Polyolefine sind Tetrafluorethylenpolymerisate mit mittleren Teilchendurchmessern von 100 bis 1.000 µm und Dichten von 2,0 g/cm³ bis 2,3 g/cm³.

Zur Herstellung einer koagulierten Mischung aus C und dem fluorierten Polyolefin wird zuerst eine wäßrige Emulsion (Latex) eines Pfropfpolymerisates C mit mittleren Latexteilchendurchmessern von 0,05 bis 2 µm, insbesondere 0,1 bis 0,6 µm, mit einer feinteiligen Emulsion eines fluorierten Polyolefins in Wasser mit mittleren Teilchendurchmessern von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%.

Die wäßrige Emulsion des Pfropfpolymerisats C besitzt Feststoffgehalte von 25 bis 60 Gew.-%, vorzugsweise von 30 bis 45 Gew.-%, insbesondere von 30 bis 35 Gew.-%.

Die Mengenangabe bei der Beschreibung der Komponente C schließt den Anteil des Pfropfpolymerisats in der koagulierten Mischung aus Pfropfpolymerisat und fluorierten Polyolefinen nicht mit ein.

In der Emulsionsmischung liegt das Gewichtsverhältnis Pfropfpolymerisat C zum fluorierten Polyolefins bei 95:5 bis 60:40. Die Emulsionsmischung wird in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen Formmassen werden hergestellt, indem man die jeweiligen Bestandteile in bekannter Weise vermischt und bei Temperaturen von 200°C bis 300°C in üblichen Aggregaten wie Innenknetern. Extrudern und Doppelwellenschnecken schmelzcompoundiert und schmelzextrudiert, wobei das fluorierte Polyolefin vorzugsweise in Form der oben erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern durch Spritzguß verwendet werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Computer, Drucker, Kopierer oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der obengenannten sowie die Formkörper aus den erfindungsgemäßen Formmassen.

## Beispiele

### Komponente A

Lineares Polycarbonat auf Basis Bisphenol A mit einer relativen Lösungsviskosität von 1,252, gemessen in $CH_2Cl_2$ als Lösungsmittel bei 25°C und einer Konzentration von 0,5g/100 ml.

### Komponente B

Styrol/Acrylnitril-Copolymerisat mit einem Styrol/Acrylnitril-Verhältnis von 72:28 und einer Grenzviskosität von 0.55 dl/g (Messung in Dimethylformamid bei 20°C).

### Komponente C

Pfropfpolymerisat von 45 Gew.-Teilen eines Copolymerisats aus Styrol und Acrylnitril im Verhältnis von 72: 28 auf 55 Gew.-Teile teilchenformigen vernetzten Polybutadienkautschuk (mittlerer Teilchendurchmesser $d_{50}$ = 0,4µm), hergestellt durch Emulsionspolymerisation.

### Komponente D

Magnesiumdiphenylphosphat

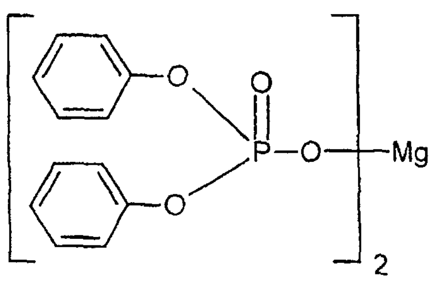

### PTFE

Tetrafluorethylenpolymerisat als koagulierte Mischung aus einer SAN-Pfropfpolymerisat-Emulsion gemäß obengenannter Komponente in Wasser und einer Tetrafluorethylenpolymerisat-Emulsion in Wasser. Das Gewichtsverhältnis Pfropfpolymerisat zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5µm. Die SAN-Pfropfpolymerisat-Emulsion besitzt einen Feststoffgehalt von 34 Gew.-% und einen mittleren Latexteilchendurchmesser von $d_{50}$ = 0,28 µm.

Die Emulsion des Tetrafluorethylenpolymerisats (Teflon 30 N der Fa. DuPont) wird mit der Emulsion des Pfropfpolymerisats vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Herstellung und Prüfung der erfindungsgemäßen Formmassen**

Das Mischen der Komponenten mit den üblichen Verarbeitungshilfsmitteln erfolgt auf einem 3 l-Innenkneter. Die Formkörper werden auf einer Spritzgießmaschine Typ Arburg 270E bei 260°C hergestellt.

Dic Bestimmung der Kerbschlagzähigkeit erfolgt nach Methode ISO 180 1A an Stäben der Abmessung 80 x 10 x 4 $mm^3$ bei Raumtemperatur.

Die Bestimmung der Wärmeformbeständigkeit nach Vicat B erfolgt gemäß DIN 53 460 an Stäben der Abmessung 80 x 10 x 4 $mm^3$.

Das Spannungsrißverhalten wird an Stäben der Abmessung 80 x 10 x 4 mm, Massetemperatur 260°C untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung 2,4 %) und bei Zimmertemperatur im Testmedium gelagert. Das Spannungsrißverhalten wird über die Rißbildung bzw. den Bruch in Abhängigkeit von der Expositionszeit im Testmedium beurteilt.

**Tabelle 1:** Zusammensetzung und Ergebnisse

(Angaben in Gew.-Teilen)

| Beispiel / Komponente | 1 | 2 |
|---|---|---|
| A | 67,0 | 67,0 |
| B | 10,0 | 10,0 |
| C | 7,5 | 7,5 |
| PTFE koaguliert | 3,5 | 3,5 |
| D | 10,0 | 12,0 |
| $a_k$ Izod 260°C/RT ($kJ/m^2$) | 68z | 73z |
| Vicat B 120 (°C) | 128 | 133 |
| ESC-Screening: 10 min/2,4 % | ohne Befund | |

Durch Einsatz der erfindungsgemäßen Phosphorverbindungen in Polycarbonat-ABS-Mischungen werden

Formmassen mit hoher Wärmeformbestndigkeit und überraschend guten mechanischen Eigenschaften (Kerbschlagzähigkeit, Spannungsrißverhalten) erhalten.

**Patentansprüche**

**1.** Thermoplastische Formmassen enthaltend

A. 5 bis 95 Gew.-Teile Polycarbonat und/oder Polyestercarbonat

B. 0 bis 50 Gew.-Teile eines Vinyl(co)polymerisates aus einem oder wenigstens zwei ethylenisch ungesättigten Monomeren,

C. 0,5 bis 60 Gew.-Teile Pfropfpolymerisat mit einer Glasübergangstemperatur <10°C erhältlich durch Pfropfpolymerisation von mindestens 2 der Monomeren ausgewählt aus Chloropren, Butadien, Isopren, Styrol, Acrylnitril, Ethylen, Propylen, Vinylacetat und (Meth)-Acrylsäureester mit 1 bis 18 C-Atomen in der Alkoholkomponente,
und

D. 0,5 bis 20 Gew.-Teilen Phosphorverbindung der Formel (Ia) und/oder (Ib)

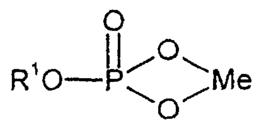

(Ia)

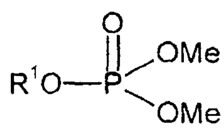

(Ib)

oder der Formel (II)

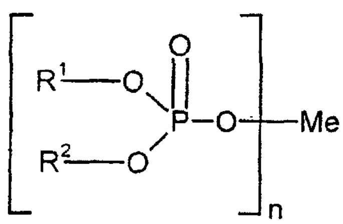

(II)

worin

R¹ und R² unabhängig voneinander, gegebenenfalls halogeniertes $C_1$-$C_{24}$-Alkyl, jeweils gegebenenfalls durch Halogen und/oder $C_1$-$C_{10}$-Alkyl substituiertes $C_5$-$C_6$-Cycloalkyl, $C_6$-$C_{20}$-Aryl oder $C_7$-$C_{12}$-Aralkyl bedeuten, oder im Falle der Formel (II) $R^1$ und $R^2$ auch einen Alkylen- oder Arylen-Rest bilden können,

Me für ein Metall. ausgewählt aus der 1. bis 3. Hauptgruppe oder der Nebengruppe VIII. 1B oder 2B des Periodensystems steht,

und n durch die Wertigkeit des Metallions bestimmt wird.

**2.** Formmassen gemäß Anspruch 1, enthaltend 10 bis 90 Gew.-Teile A., 1 bis 30 Gew.-Teile B., 1 bis 40 Gew.-Teile

C. und 1 bis 18 Gew.-Teile D.

**3.** Formmassen gemäß Anspruch 1, enthaltend als Komponente B (Co)Polymere von einem oder wenigstens 2 Monomeren ausgewählt aus der Gruppe der Verbindungen Styrol, α-Methylstyrol, kernsubstituierte Styrole, Acrylnitril, Methacrylnitril, Methylmethacrylat, Maleinsäureanhydrid, N-substituierte Maleinimide und (Meth)-Acrylsäureester mit 1 bis 18 C-Atomen in der Alkoholkomponente.

**4.** Formmassen gemäß Anspruch 1 enthaltend als Komponente C Pfropfpolymerisate aus

C.1 5 bis 95, vorzugsweise 30 bis 80 Gew.-Teilen einer Mischung aus

C.1.1 50 bis 99 Gew.-Teilen Styrol, α-Methylstyrol, halogen- oder methylkernsubstituierten Styrolen, Methylmethacrylat oder Mischungen dieser Verbindungen und

C.1.2 1 bis 50 Gew.-Teilen Acrylnitril, Methacrylnitril, Methylmethacrylat, Maleinsäureanhydrid, $C_1$-$C_4$-Alkyl bzw. Phenyl-N-substituierten Maleinimiden oder Mischungen dieser Verbindungen auf

C.2 5 bis 95 Gew.-Teile Polymerisat auf Dien- und/oder Alkylacrylat-Basis mit einer Glasübergangstemperatur unter -10°C.

**5.** Formmassen gemäß Anspruch 4, wobei C.2 Polybutadien, Polyisobutene, Polyisoprene, Butadien/Styrol- oder Butadien/Acrylnitril-Copolymerisat ist.

**6.** Formmassen gemäß Anspruch 1, wobei in den Formeln (Ia), (Ib) und (II) Me für ein Metall aus der 2. und 3. Hauptgruppe oder der II. Nebengruppe steht.

**7.** Formmassen gemäß Anspruch 6, wobei in den Formeln (Ia), (Ib) und (II) Me für Mg, Ca, Ba, Bor, Al oder Zn steht.

**8.** Formmassen gemäß Anspruch 1, wobei $R^1$ und $R^2$ für gegebenenfalls halogeniertes $C_1$-$C_{10}$-Alkyl, jeweils gegebenenfalls durch Halogen und/oder $C_1$-$C_4$-Alkyl substituiertes Cyclopentyl, Cyclohexyl, Phenyl, Naphtyl oder Phenyl-$C_1$-$C_4$-alkyl stehen.

**9.** Formmassen gemäß Anspruch 1, wobei die Verbindungen gemäß Komponente D durchschnittliche Teilchendurchmesser von kleiner 10 µm aufweisen.

**10.** Formmassen gemäß Anspruch 9, wobei der durchschnittliche Teilchendurchmesser der Komponente D <1 µm ist.

**11.** Formmassen gemäß Anspruch 10, wobei der durchschnittliche Teilchendurchmesser der Komponente D <300 nm ist.

**12.** Formmassen gemäß Anspruch 1, enthaltend Zusatzstoffe ausgewählt aus mindestens einem aus der Gruppe der anorganischen Verstärkungsmaterialien, Flammschutzmittel, fluorierte Polyolefine, feinstteiligen anorganischen Verbindungen, Gleit- Entformungsmittel, Nukleiermittel, Antistatika, Stabilisatoren, Farbstoffe und Pigmente.

**13.** Formmassen gemäß Anspruch 12, enthaltend als Flammschutzmittel anorganische, organische Halogenverbindungen, anorganische Hydroxide, Oxide, Antimonate, Borate, Molybdate, Phosphor-Verbindungen unterschiedlich von Verbindungen der Formeln (Ia), (Ib) und (II), und/oder Siloxan-Verbindungen.

**14.** Formmassen gemäß Anspruch 12 enthaltend als Flammschutzmittel Phosphor-Verbindungen der Formel (V)

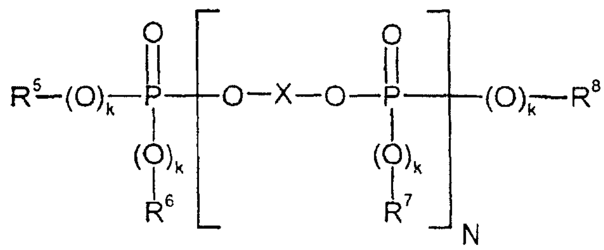

(V).

in welcher

$R^5$, $R^6$, $R^7$ und $R^8$, unanhängig voneinander jeweils gegebenenfalls halogeniertes $C_1$-$C_8$-Alkyl, jeweils gegebenenfalls durch Alkyl und/oder Halogen substituiertes $C_5$-$C_6$-Cycloalkyl, $C_6$-$C_{20}$-Aryl oder $C_7$-$C_{12}$-Aralkyl bedeuten,

X für einen ein- oder mehrkernigen aromatischen Rest mit 6 bis 30 C-Atomen steht,

k für 0 oder 1 steht und

N für Werte von 0 bis 30 steht.

**15.** Formmassen gemäß Anspruch 14, wobei X in Formel (V) sich von Diphenolen der Formel (II) ableitet:

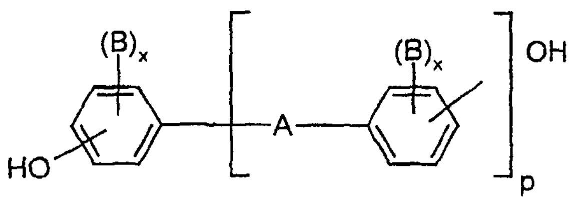

(II)

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können,
oder ein Rest der Formel (III) oder (IV)

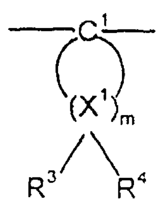

(III)

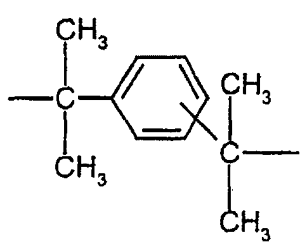

(IV)

B jeweils $C_1$-$C_{12}$-Alkyl oder Halogen,

x jeweils unabhängig voneinander 0, 1 oder 2,

p 1 oder 0 sind, und

$R^3$ und $R^4$ für jedes $X^1$ individuell wählbar, unabhängig voneinander Wasserstoff oder $C_1$-$C_6$-Alkyl,

$X^1$ Kohlenstoff und

m eine ganze Zahl von 4 bis 7 bedeuten, mit der Maßgabe, daß an mindestens einen Atom $X^1$, $R^3$ und $R^4$ gleichzeitig Alkyl sind.

**16.** Formmassen gemäß Anspruch 1, enthaltend feinstteilige anorganische Verbindungen von einem oder mehreren Metallen der 1. bis 5. Hauptgruppe oder der 1. bis 8. Nebengruppe des Periodensystems mit den Elementen Sauerstoff, Schwefel, Bor, Phosphor, Kohlenstoff, Stickstoff, Wasserstoff und/oder Silicium.

## Claims

**1.** Thermoplastic moulding compositions containing

A 5 to 95 parts by wt. of polycarbonate and/or polyester carbonate,

B 0 to 50 parts by wt. of a vinyl (co)polymer of one or at least two ethylenically unsaturated monomers,

C 0.5 to 60 parts by wt. of graft polymer with a glass transition temperature of < 10°C, obtainable by graft polymerisation of at least 2 of the monomers selected from chloroprene, butadiene, isoprene, styrene, acrylonitrile, ethylene, propylene, vinyl acetate and (meth)acrylate with 1 to 18 carbon atoms in the alcohol component,
and

D 0.5 to 20 parts by wt. of phosphorus compound corresponding to formula (Ia) and/or (Ib)

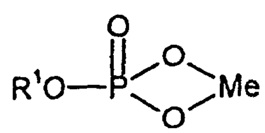

(Ia)

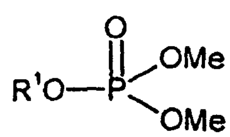

(Ib)

or to the formula (II)

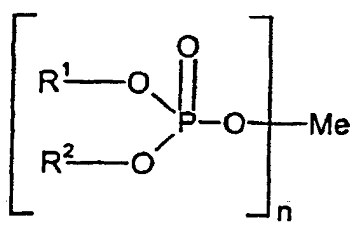

(II)

wherein

$R^1$ and $R^2$ independently of one another, mean optionally halogenated $C_1$-$C_{24}$-alkyl, $C_5$-$C_6$-cycloalkyl, $C_6$-$C_{20}$-aryl or $C_7$-$C_{12}$-aralkyl in each case optionally substituted by halogen and/or $C_1$-$C_{10}$-alkyl, or in the case of formula (II) $R^1$ and $R^2$ may also form analkylene or arylene radical,

Me stands for a metal selected from the 1st to 3rd main group or the subsidiary group VIII, IB or 2B of the periodic system,

and n is determined by the valency of the metal ion.

**2.** Moulding compositions according to claim 1 containing 10 to 90 parts by wt. of A, 1 to 30 parts by wt. of B, 1 to 40 parts by wt. of C and 1 to 18 parts by wt. of D.

**3.** Moulding compositions according to claim 1, containing as component B (co)polymers of one or at least 2 monomers selected from the group of compounds comprising styrene, α-methylstyrene, styrenes substituted on the nucleus, acrylonitrile, methacrylonitrile, methylmethacrylate, maleic anhydride, N-substituted maleinimides and (meth)acrylates with 1 to 18 C atoms in the alcohol component.

**4.** Moulding compositions according to claim 1 containing as component C a graft polymer of

C.1 5 to 95, preferably 30 to 80 parts by wt. of a mixture of

C.1.1 50 to 99 parts by wt. of styrene, α-methylstyrene, styrenes substituted on the nucleus with halogen or methyl, methylmethacrylate or mixtures of said compounds, and

C.1.2 1 to 50 parts by wt. of acrylonitrile, methacrylonitrile, methylmethacrylate, maleic anhydride, $C_1$-$C_4$-alkyl or phenyl-N-substituted maleinimides, or mixtures of said compounds on

C.2 5 to 95 parts by wt. of polymer based on diene and/or alkylacrylate with a glass transition temperature below -10°C.

**5.** Moulding compositions according to claim 4, wherein C.2 is polybutadiene, polyisobutenes, polyisoprenes, butadiene/styrene or butadiene/acrylonitrile copolymer.

**6.** Moulding compositions according to claim 1, wherein in the formulae (Ia), (Ib) and (II) Me stands for a metal of the 2nd and 3rd main group and of subsidiary group II.

**7.** Moulding compositions according to claim 6, wherein in the formulae (Ia), (Ib) and (II) Me stands for Mg, Ca, Ba, B, Al or Zn.

**8.** Moulding compositions according to claim 1, wherein $R^1$ and $R^2$ stand for optionally halogenated $C_1$-$C_{10}$-alkyl, cyclopentyl, cyclohexyl, phenyl, naphthyl or phenyl-$C_1$-$C_4$-alkyl in each case optionally substituted by halogen and/or $C_1$-$C_4$-alkyl.

**9.** Moulding compositions according to claim 1, wherein the compounds according to component D have average particle diameters of less than 10 μm.

**10.** Moulding compositions according to claim 9, wherein the average particle diameter of component D is < 1 μm.

**11.** Moulding compositions according to claim 10, wherein the average particle diameter of component D is < 300 nm.

**12.** Moulding compositions according to claim 1, containing additives selected from at least one of the group of inorganic reinforcing materials, flame retardants, fluorinated polyolefins, very finely divided inorganic compounds, lubricants, mould release agents, nucleating agents, antistatic agents, stabilisers, dyes and pigments.

**13.** Moulding compositions according to claim 12, containing as flame retardant inorganic, organic halogen compounds, inorganic hydroxides, oxides, antimonates, borates, molybdates, phosphorus compounds different from compounds corresponding to formulae (Ia), (Ib) and (II) and/or siloxane compounds.

**14.** Moulding compositions according to claim 12 containing, as flame retardant, phosphorus compounds corresponding to formula (V)

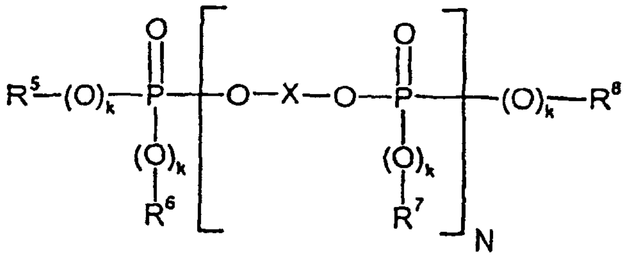

(V)

wherein

| | |
|---|---|
| $R^5$, $R^6$, $R^7$ and $R^8$, | independently of one another, mean $C_1$-$C_8$-alkyl in each case optionally halogenated, $C_5$-$C_6$-cycloalkyl, $C_6$-$C_{20}$-aryl or $C_7$-$C_{12}$-aralkyl, in each case optionally substituted by alkyl and/or halogen, |
| X | stands for a mono- or polynuclear aromatic radical with 6 to 30 carbon atoms, |
| k | stands for 0 or 1 and |
| N | stands for values from 0 to 30. |

**15.** Moulding compositions according to claim 14, wherein X in formula (V) is derived from diphenols corresponding to formula (II) :

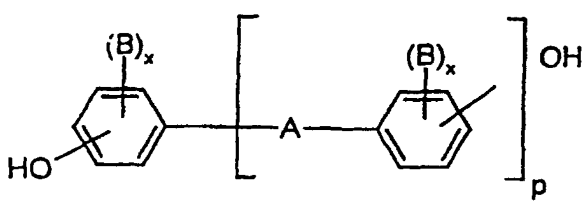

(II)

wherein

A means a simple compound, $C_1$-$C_5$-alkylene, $C_2$-$C_5$-alkylidene, $C_5$-$C_6$-cycloalkylidene, -O-, -SO-, -CO-, -S-, $-SO_2-$, $C_6$-$C_{12}$-arylene, on which further aromatic rings optionally containing heteroatoms may be condensed,
or a radical corresponding to formula (III) or (IV)

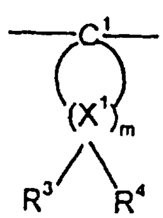

(III)

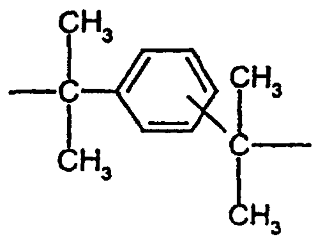

(IV)

| | |
|---|---|
| B | in each case means $C_1$-$C_{12}$-alkyl or halogen, |
| x | in each case, independently of one another, is 0, 1 or 2, |
| p | is 1 or 0, and |
| $R^3$ and $R^4$ | which may be chosen individually for each $X^1$, independently of one another, mean hydrogen or $C_1$-$C_6$-alkyl |
| $X^1$ | means carbon and |
| m | is an integer from 4 to 7, provided that on at least one atom $X^1$, $R^3$ and $R^4$ are simultaneously alkyl. |

**16.** Moulding compositions according to claim 1, containing very finely divided inorganic compounds of one or more metals of the 1st to the 5th main group and of the 1st to the 8th subsidiary group of the periodic system with the elements oxygen, sulfur, boron, phosphorus, carbon, nitrogen, hydrogen and/or silicon.

**Revendications**

**1.** Matières à mouler thermoplastiques contenant :

A. 5 à 95 parties en poids de polycarbonate et/ou de polyester-carbonate;
B. 0 à 50 parties en poids d'un (co)polymère vinylique constitué d'un ou d'au moins deux monomères éthyléniquement insaturés;
C. 0,5 à 60 parties en poids d'un polymère greffé avec une température de transition vitreuse < 10°C pouvant être obtenu par polymérisation greffée d'au moins 2 des monomères sélectionnés parmi les chloroprène, butadiène, isoprène, styrène, acrylonitrile, éthylène, propylène, acétate de vinyle et ester d'acide (méth)acrylique avec 1 à 18 atomes de carbone dans le composant alcool, et
D. 0,5 à 20 parties en poids d'un composé de phosphore de formule (Ia) et/ou (Ib)

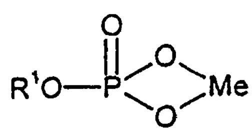

(Ia)

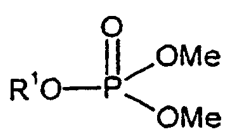

(Ib)

ou de formule (II)

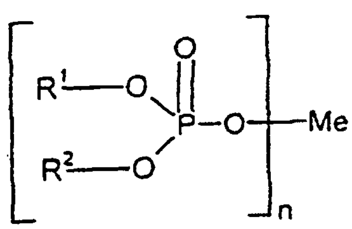

(II)

dans lesquelles

$R^1$ et $R^2$ signifient indépendamment l'un de l'autre un alkyle en $C_1$-$C_{24}$ le cas échéant halogéné, un aryle en $C_6$-$C_{20}$, un aralkyle en $C_7$-$C_{12}$ ou un cycloalkyle en $C_5$-$C_6$ chaque fois le cas échéant substitué par un halogène et/ou un alkyle en $C_1$-$C_{10}$ ou, dans le cas de la formule (II) $R^1$ et $R^{12}$ peuvent également former un radical alkylène ou arylène;

Me vaut un métal sélectionné parmi les $1^{er}$ au $3^{ème}$ groupes principaux ou le sous-groupe VIII, 1B ou 2B du système périodique,

et n est déterminé par la valence de l'ion métal.

**2.** Matières à mouler selon la revendication 1, contenant 10 à 90 parties en poids de A., 1 à 30 parties en poids de B., 1 à 40 parties en poids de C. et 1 à 18 parties en poids de D.

**3.** Matières à mouler selon la revendication 1, contenant comme composant B des (co)polymères d'un ou d'au moins 2 monomères sélectionnés parmi de groupement des composés styrène, $\alpha$-méthylstyrène, styrènes dont le noyau est substitué, acrylonitrile, méthacrylonitrile, méthylméthacrylate, anhydride d'acide maléique, imides maléiques substitués sur N et esters d'acide (méth)acrylique avec 1 à 18 atomes de carbone dans le composant alcool.

**4.** Matières à mouler selon la revendication 1, contenant comme composant C des polymères greffés constitués de

C.1 5 à 95, de préférence 30 à 80 parties en poids d'un mélange constitué de

C.1.1 50 à 99 parties en poids de styrène, $\alpha$-méthylstyrène, styrènes dont le noyau est substitué par un halogène ou un méthyle, méthylméthacrylate ou des mélanges de ces composés, et

C.1.2 1 à 50 parties en poids d'acrylonitrile, méthacrylonitrile, méthylméthacrylate, anhydride d'acide maléique, imides maléiques N-substitués par un alkyle en $C_1$-$C_4$ ou par un phényle ou des mélanges de ces composés,

C.2 5 à 95 parties en poids de polymère à base de diène et/ou d'alkylacrylate avec une température de transition vitreuse inférieure à -10°C.

**5.** Matières à mouler selon la revendication 4, dans lesquelles C.2 est du polybutadiène, de polyisobutène, du polyisoprène, un copolymère butadiène/styrène ou butadiène/acrylonitrile.

**6.** Matières à mouler selon la revendication 1, dans lesquelles Me, dans les formules (Ia), (Ib) et (II) vaut un métal des $2^{ème}$ et $3^{ème}$ groupes principaux ou du $II^{ème}$ sous-groupe.

**7.** Matières à mouler selon la revendication 6, dans lesquelles Me, dans les formules (Ia), (Ib) et (II) vaut Mg, Ca, Ba, Bore, Al ou Zn.

**8.** Matières à mouler selon la revendication 1, dans lesquelles $R^1$ et $R^2$ valent un alkyle en $C_1$-$C_{10}$ le cas échéant halogéné, un cyclohexyle, un phényle, un naphtyle, un phényl-alkyle en $C_1$-$C_4$ ou un cyclopentyle chaque fois le cas échéant substitué par un halogène et/ou un alkyle en $C_1$-$C_4$.

**9.** Matières à mouler selon la revendication 1, dans lesquelles les composés présentent, selon le composant D, des diamètres moyens de particules inférieurs à 10 µm.

**10.** Matières à mouler selon la revendication 9, dans lesquelles le diamètre moyen de particule du composant D est < 1 µm.

**11.** Matières à mouler selon la revendication 10, dans lesquelles le diamètre moyen de particule du composant D est < 300 nm.

**12.** Matières à mouler selon la revendication 1, contenant des additifs sélectionnés parmi au moins une des matières de renforcement inorganiques, ignifugeants, polyoléfines fluorées, composés inorganiques très finement divisés, lubrifiants et agents démoulants, agents de nucléation, antistatiques, stabilisants, colorants et pigments.

**13.** Matières à mouler selon la revendication 12, contenant comme ignifugeants des composés halogénés inorganiques, organiques, des hydroxydes inorganiques, des oxydes, des antimonates, des borates, des molybdates, des composés de phosphore différents des composés des formules (Ia), (Ib) et (II), et/ou des composés siloxane.

**14.** Matières à mouler selon la revendication 12, contenant comme ignifugeants des composés de phosphore de formule (V)

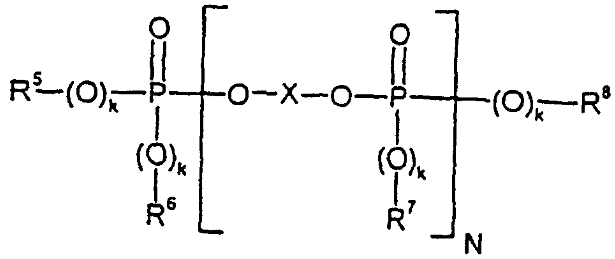

(V).

dans laquelle

| | |
|---|---|
| $R^5$, $R^6$, $R^7$ et $R^8$ | signifient indépendamment l'un de l'autre un alkyle en $C_1$-$C_8$ chaque fois le cas échéant halogéné, un aryle en $C_6$-$C_{20}$, un aralkyle en $C_7$-$C_{12}$ ou un cycloalkyle en $C_5$-$C_6$ chaque fois le cas échéant substitué par un alkyle et/ou un halogène, |
| X | vaut un radical aromatique à un ou plusieurs noyaux avec 6 à 30 atomes de carbone, |
| k | est 0 ou 1, et |
| N | vaut des valeurs de 0 à 30. |

**15.** Matières à mouler selon la revendication 14, dans lesquelles X dans la formule (V) est dérivé des diphénols de la formule (II) :

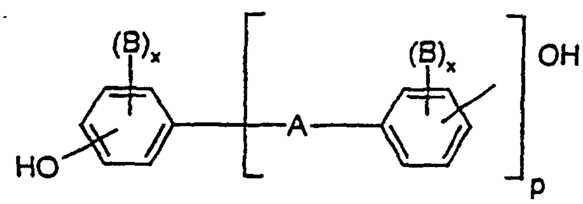

(II)

dans laquelle

| | |
|---|---|
| A | est une liaison simple, un alkylène en $C_1$-$C_5$, un alkylidène en $C_2$-$C_5$, un cycloalkylidène en $C_5$-$C_6$, -O-, -SO-, -CO-, -S-, $-SO_2-$, un arylène en $C_6$-$C_{12}$ sur lequel peuvent être condensés d'autres cycles aromatiques contenant le cas échéant des hétéroatomes,<br>ou un radical de formule (III) ou (IV) |

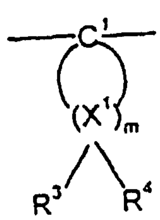

(III)

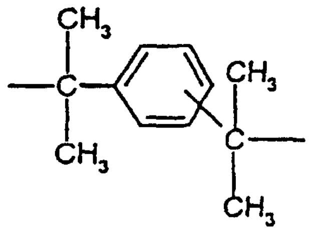

(IV)

B est chaque fois un alkyle en $C_1$-$C_{12}$ ou un halogène,
x signifie chaque fois indépendamment l'un de l'autre 0, 1 ou 2,
p est 1 ou 0, et
$R^3$ et $R^4$ sont, pour chaque $X^1$, et pouvant être choisis de manière individuelle, indépendamment l'un de l'autre, un hydrogène ou un alkyle en $C_1$-$C_6$,
$X^1$ est un carbone, et
m signifie un nombre entier de 4 à 7, étant entendu que, sur au moins un atome $X^1$, $R^3$ et $R^4$ sont simultanément un alkyle.

**16.** Matières à mouler selon la revendication 1, contenant des composés inorganiques très finement divisés de un ou plusieurs métaux des 1^er au 5^ème groupes principaux ou des 1^er au 8^ème sous-groupes du système périodique avec les éléments oxygène, soufre, bore, phosphore, carbone, azote, hydrogène et/ou silicium.